(19) Europäisches Patentamt
European Patent Office
Office européen des brevets

(11) **EP 3 983 606 B1**

(12) **EUROPÄISCHE PATENTSCHRIFT**

(45) Veröffentlichungstag und Bekanntmachung des Hinweises auf die Patenterteilung:
**21.06.2023 Patentblatt 2023/25**

(21) Anmeldenummer: **20726040.7**

(22) Anmeldetag: **12.05.2020**

(51) Internationale Patentklassifikation (IPC):
**D21F 3/10** (2006.01)

(52) Gemeinsame Patentklassifikation (CPC):
**D21F 3/10; D21F 7/00**

(86) Internationale Anmeldenummer:
**PCT/EP2020/063135**

(87) Internationale Veröffentlichungsnummer:
**WO 2020/249343 (17.12.2020 Gazette 2020/51)**

(54) **VERFAHREN UND VORRICHTUNG ZUR BESTIMMUNG DER VERSCHMUTZUNG EINER SAUGWALZE EINER MASCHINE ZUR HERSTELLUNG EINER FASERSTOFFBAHN**

METHOD AND DEVICE FOR THE DETERMINATION OF THE CONTAMINATION OF A SUCTION ROLL OF A MACHINE FOR PRODUCING A FIBROUS WEB

PROCÉDÉ ET DISPOSITIF POUR DÉTERMINER L'ENCRASSEMENT D'UN CYLINDRE ASPIRANT D'UNE MACHINE POUR PRODUIRE UNE BANDE DE MATIÈRE FIBREUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2019 DE 102019116197**

(43) Veröffentlichungstag der Anmeldung:
**20.04.2022 Patentblatt 2022/16**

(73) Patentinhaber: **Voith Patent GmbH**
**89522 Heidenheim (DE)**

(72) Erfinder:
• **ERKELENZ, Marc**
**89231 Neu-Ulm (DE)**
• **CAMPOS SOUZA, José Luiz**
**89518 Heidenheim (DE)**

(74) Vertreter: **Voith Patent GmbH - Patentabteilung**
**St. Pöltener Straße 43**
**89522 Heidenheim (DE)**

(56) Entgegenhaltungen:
**DE-A1-102008 002 259     DE-A1-102009 027 860**
**DE-A1-102015 220 939**

**Beschreibung**

Die Erfindung betrifft eine Vorrichtung sowie ein Verfahren zur Bestimmung der Verschmutzung einer Saugwalze für eine Maschine zur Herstellung oder Verarbeitung einer Faserstoffbahn.

Bei der Herstellung von Faserstoffbahnen, insbesondere von Papierbahnen, werden an verschiedenen Stellen besaugte Walzen eingesetzt.

Diese umfassen üblicherweise einen zumindest teilweise perforierten und um seine Längsachse rotierbaren Walzenmantel, sowie eine Einrichtung zum Anlegen einer Druckdifferenz zwischen der Umgebung und dem Innenraum der Walze. Saugwalzen können einerseits dazu dienen, die Faserstoffbahn auf einer bestimmten Bespannung zu halten oder sie auf diese zu übergeben. In anderen Anwendungen dienen Saugwalzen auch der Entwässerung der Bahn. Dabei wird Wasser aus der Bahn durch eine Bespannung hindurch ins Innere der Walze gesaugt. Zusammen mit dem Wasser wird dadurch allerdings auch eine Vielzahl von Störstoffen mit abgesaugt. Bei diesen Störstoffen kann es sich beispielsweise um Zellstofffasern aber auch Füll- und Feinstoffe handeln. Mit fortschreitende Betriebsdauer der Saugwalze kommt es dadurch zu einer ganz oder teilweisen Verstopfen der Perforationen des Walzenmantels. Durch diese Verschmutzung der Saugöffnungen nimmt die Leistungsfähigkeit der Saugwalze kontinuierlich ab, bis zu einem Punkt, an dem ein störungsfreier Betrieb der Walze nicht mehr möglich ist.

Im Stand der Technik, insbesondere der DE 10 2008 002 259 wurde deshalb vorgeschlagen, die Saugwalzen mit einer Reinigungsvorrichtung zu versehen. Diese Reinigungsvorrichtung ist dazu eingerichtet, die Saugbohrungen der Walze durch ein Reinigungsmedium unter hohem Druck zu säubern. Eine solche Reinigung ist jedoch, wie dasselbe Dokument erläutert, nicht während des laufenden Betriebs der Anlage möglich. Daher erfolgt die Reinigung nur im Stillstand der Maschine. Die DE 10 2015 220939 offenbart ein Verfahren zur Bestimmung der Verschmutzung einer Saugwalze.

Nachteilig an dem Stand der Technik ist es, dass dem Betreiber keine Informationen vorliegen, ob bzw. wann die Saugwalze gereinigt werden muss. Daher wir die Reinigung in regelmäßigen Intervallen durchgeführt, und zwar üblicherweise bei ohnehin notwendigen Stillständen. Um eine Störung durch die Verschmutzung sicher zu vermeiden, muss der Betreiber daher die Reinigung früher und häufiger durchführen als es durch die tatsächliche Verschmutzung eigentlich notwendig wäre. Dies führt zu höheren Kosten und Personalaufwand sowie gesteigertem Verbrauch an Reinigungsmedium.

Es ist daher Aufgabe der Erfindung, den Stand der Technik derart weiter zu entwickeln, dass die Reinigungsintervalle der Saugwalzen verlängert, und unnötige Reinigungen vermieden werden können.

Es ist weiterein eine Aufgabe der Erfindung, die Verschmutzung der Saugwalze zuverlässig ermitteln zu können.

Die Aufgaben werden vollständig gelöst durch ein Verfahren gemäß dem Kennzeichen des Anspruchs 1 sowie eine Vorrichtung gemäß dem Kennzeichen des Anspruchs 8. Vorteilhafte Ausführungen sind in den Unteransprüchen beschrieben.

Hinsichtlich des Verfahrens wird die Aufgabe gelöst durch ein Verfahren zur Bestimmung der Verschmutzung einer Saugwalze einer Maschine zur Herstellung einer Faserstoffbahn, insbesondere einer Papier-, Karton-, Tissue oder Zellstoffbahn, welches die folgenden Schritte umfasst.

     a.) Durchströmen einer Messfläche A des Walzenmantels mit einem Fluid, wobei entweder der Druck oder die Durchströmgeschwindigkeit des Fluid konstant gehalten werden

     b.) Ermitteln einer Kenngröße K, wobei die Kenngröße K bei Durchströmen mit konstantem Druck aus der resultierenden Durchströmgeschwindigkeit und bei der Messung mit konstanter Durchströmgeschwindigkeit aus dem resultierenden Druckabfall besteht.

     c.) Bereitstellen einer oder mehrerer Referenzgrößen

     d.) Bestimmung eines Verschmutzungsgrads der Saugwalze durch Vergleich der Kenngröße K mit der oder den Referenzgrößen.

Als Flächeninhalt der Fläche A, bzw. der Flächen $A_i$ soll im Rahmen dieser Anmeldung jeweils die gekrümmte Fläche der zylindrischen Wand des Walzenmantels verstanden werden.

Die Durchströmgeschwindigkeit sei dabei das pro Zeiteinheit durch die Messfläche strömende Volumen, angegeben beispielsweise in $mm^3/mm^2/s$.

Die genaue Art und Weise, wie der Verschmutzungsgrad bestimmt wird, kann an die Bedürfnisse des jeweiligen Anwenders angepasst werden.

Vorteilhafterweise kann die Bestimmung des Verschmutzungsgrads so erfolgen, dass der Wert zwischen 0 und 1 liegt, wobei beispielsweise "0" für unverschmutzt und "1" für vollständig verschmutzt stehen kann

Eine mögliche Ausgestaltung der Schritte c) und d) kann sein:

     c1.) Bereitstellen einer Referenzgröße K0, die den Wert der Kenngröße für die nicht verschmutzte Saugwalze beschreibt.
     d1.) Bestimmung eines Verschmutzungsgrads der Saugwalze unter Verwendung der Differenz der Werte K-K0 oder des Quotienten K/K0

Ein mögliches Beispiel hierfür kann es sein, den Verschmutzungsgrad V mittels

$$V = \frac{K0 - K}{K0}$$

zu bestimmen, wobei K0 die Durchströmgeschwindigkeit der unverschmutzten Walze ist, und K der aktuell gemessene Wert der Durchströmgeschwindigkeit.

Ein anderes mögliches Beispiel kann es sein, den Verschmutzungsgrad V mittels

$$V = \cos\left(\frac{K}{K0}\frac{\pi}{2}\right)$$

zu bestimmen. Bei dieser Berechnung würde ein leichter Abfall in der Durchströmungsgeschwindigkeit einen verhältnismäßig geringen Einfluss auf den berechneten Verschmutzungsgrad haben, als im ersten Beispiel.

Eine weitere vorteilhafte Alternative kann es sein, Referenzgrößen durch Messung an gezielt verschmutzen Bohrungen zu messen. So kann man ein Bohrmuster erzeugen, dass dem der zu messenden Walze ganz oder weitgehend entspricht. Zur Erzeugung einer Referenzgröße, z.B. für 50% Verschmutzung, kann man 50% der Bohrungen einer Messfläche verstopfen, und dann an dieser Fläche eine Messung durchführen und erhält eine Referenzgröße $K_{50\%}$. Wiederholt man diese Messungen für verschiedenen Verschmutzungsgrade, erhält man einen Satz von Referenzgrößen (z.B. $K_{15\%}$, $K_{25\%}$, $K_{50\%}$). Durch Vergleich der Kenngröße K mit den Referenzwerten oder mit einer geeigneten Interpolation/Extrapolation dieser Referenzwerte kann ein Verschmutzungsgrad bestimmt werden. Für eine qualitativ gute Bestimmung des Verschmutzungsgrad ist die Verwendung von 2, 3, 4 oder mehr Referenzwerten vorteilhaft.

Die gezeigten Beispiele, die so auch für den Druckabfall angewendet werden können, sollen die Erfindung nicht einschränken, sondern nur exemplarisch die Vielzahl an Möglichkeiten zur Ermittlung des Verschmutzungsgrads aus den Messwerten andeuten.

Ein großer Vorteil dieses Verfahrens ist es, dass dadurch die Verschmutzung der Saugwalze beurteilt werden kann, ohne sie aus der Maschine auszubauen. Diese Durchströmmessung benötigt nur wenige Minuten Zeit, und kann daher mit sehr geringem Aufwand bei jedem auch noch so kurzen Maschinenstillstand durchgeführt werden. Daher hat der Betreiber die Möglichkeit, die Verschmutzungsentwicklung der Saugwalze regelmäßig zu überwachen. Eine Reinigung der Walze muss daher nur noch dann erfolgen, wenn der Verschmutzungsgrad der Walze einen kritischen Wert erreicht hat. Dieser kritische Wert kann je nach produzierter Papiersorte und Rohstoffqualität unterschiedlich sein. Alternativ kann auch kontinuierlich gereinigt werden, damit die Verschmutzungen nicht aushärten und so praktisch nicht mehr zu reinigen sind, ohne die Walze auszubauen.

Heute kann die Verschmutzung bei Stillstand mit einer in der Maschine verbauten Walze allenfalls visuell abgeschätzt werden. Hier ist aber die Messperson ein signifikanter Faktor für mögliche Fehleinschätzungen und liefert in der Regel keine konstante Einschätzung, sondern wird durch die Tagesform beeinflusst. Ebenfalls haben mehrere Personen unterschiedliche subjektive Empfinden und liefern somit u.U. auch stark unterschiedliche Ergebnisse bzw. Einschätzungen

Im Vergleich mit einer bloßen optischen Inspektion der Saugwalze durch das Betreiberpersonal hat das Verfahren gemäß einem Aspekt der Erfindung den weiteren großen Vorteil, dass es die tatsächliche Reduzierung der Durchströmbarkeit der Saugbohrungen bestimmt. Eine bloße Betrachtung der Ober- oder Unterseite der Saugbohrungen kann keinen Aufschluss über die Verschmutzung im mittleren Bereich der teilweise bis zu 100 mm tiefen Bohrungen des Walzenmantels geben.

Da die Saugwalze nicht notwendigerweise gleichmäßig verschmutzt kann es vorteilhaft sein, die Schritte a.) und b.) mehrfach (n-mal) durchzuführen. Die Schritte können beispielswiese mindestens 4-mal, mindestens 8-mal, oder mindestens 16-mal mal wiederholt werden. Die Messungen finden dabei jeweils an Messflächen Ai (i=1,...n) statt wodurch Größen Ki ermittelt werden. Die Flächen Ai können dabei alle disjunkt sein, oder aber sich zumindest teilweise überlappen. Die Kenngröße K kann dabei als Mittelwert der Ki gebildet werden. Zweckmäßig ist dabei ein arithmetischer Mittelwert, es können aber auch andere Mittel gebildet werden, beispielsweise ein gewichteter Mittelwert, der gewisse Messpositionen stärker gewichte, als andere.

Bei dem Fluid kann es sich bevorzugt um ein Gas, insbesondere um Luft handeln.

In einer vorteilhaften Ausgestaltung des Verfahrens kann vorgesehen sein, dass die Durchströmung bei einem konstanten Druck erfolgt, und dieser Druck zwischen 20 [Pa] und 200 [Pa], insbesondere zwischen 50 [Pa] und 150 [Pa] gewählt ist.

In einer weiteren vorteilhaften Ausgestaltung des Verfahrens kann vorgesehen sein, dass die Durchströmung bei konstanter Durchströmgeschwindigkeit erfolgt, wobei diese Geschwindigkeit zwischen 250 [mm$^3$/mm$^2$/s] und 2000 [mm$^3$/mm$^2$/s], insbesondere zwischen 500 [mm$^3$/mm$^2$/s] und 1000 [mm$^3$/mm$^2$/s] gewählt ist.

Bevorzugt kann vorgesehen sein, dass die Messfläche A bzw. bei Mehrfachmessung zumindest eine, insbesondere alle der Messflächen Ai einen Flächeninhalt von weniger als 4000 mm$^2$, insbesondere zwischen 2000 mm$^2$ und 3000 mm$^2$ aufweisen.

Eine zu große Messfläche hat den Nachteil, dass insbesondere bei wenig verschmutzten Walzen durch diese Messfläche einen relativ große Menge an Fluid strömt. Dies führt dazu, dass das Messgerät einen sehr breiten Messbereich zwischen nahezu keine Durchströmung' bei stark verschmutzten Walzen bis hin zu sehr großen Durchflussmengen abdecken muss. Dies macht das Messgerät aufwändiger und dadurch teurer.

Auf der anderen Seite sollte die Größe der Messfläche aber 1000 mm² , besser noch 2000 mm² nicht unterschreiten, damit diese insbesondere bei großen Bohrdurchmessern von z.B. 5mm noch eine ausreichende Anzahl von Saugbohrungen umfasst. De Bereich zwischen 2000mm² und 3000mm² hat sich in Versuchen der Anmelderin in diesem Sinn als optimal herausgestellt.

Weiterhin kann es vorteilhaft sein, wenn die Bestimmung des Verschmutzungsgrades dadurch erfolgt, dass eine Restlaufzeit R der Saugwalze durch Vergleich der Kenngröße K mit der oder den Referenzgrößen erfolgt.

Die Restlaufzeit R, also die Zeitspanne, in der die Saugwalze noch risikolos betrieben werden kann, bevor sie wenige zu starker Verschmutzung ausgetauscht werden muss, kann eine vorteilhafte Art sein, den Verschmutzungsgrad der Walze darzustellen. Die Kenntnis einer verlässlichen Restlaufzeit R, ist für den Betreiber sehr wichtig, da er mit sehr geringem Aufwand entscheiden kann, ob z.B. die Saugwalze beim aktuellen Stillstand der Anlage bereist ausgebaut und gewartet werden muss, oder ob damit noch bis zum nächsten planmäßigen Wartungsstillstand der Anlage gewartet werden kann.

Insbesondere bei der Ermittlung der Restlaufzeit kann es vorteilhaft sein, die zugehörige Referenzgröße bzw. Referenzgrößen ohne spezielle Messung zu ermitteln; beispielsweise über Berechnungen und/oder Simulationen. So lassen sich beispielsweise sehr schnell Aussagen über die Restlaufzeit einer Saugwalze treffen, zu der im Vorfeld noch keine Referenzgrößen wie oben beschrieben ermittelt wurden.

Eine Möglichkeit hierfür ist es, für die bekannte Geometrie der Walze und ihres Bohrmusters mittels Strömungssimulationen die Referenzgröße K0% für die Durchströmung der unverschmutzten Saugwalze zu ermitteln. Eine derartige Simulation ist mit der aktuellen Technik mit vergleichsweise wenig Aufwand möglich, und kann gegebenenfalls durch den Servicetechniker, der die Verschmutzungsmessung vornimmt, direkt vor Ort durchgeführt werden.

Weiterhin ist es möglich, eine weitere Referenzgröße Kmax festzulegen, die angibt, bis zu welcher Durchströmgeschwindigkeit bzw. zu welchem Druckabfall die Walze noch betreibbar ist. Hierbei ist es möglich eine vom Kunden definierte Grenze zu verwenden, die aufgrund von Erfahrungen der Maschinenrunnability und dem daraus resultierten Ausbau der Walze definiert oder gemessen wurde.

Durch Vergleich der gemessenen Kenngröße K mit K0% und Kmax lässt sich dann eine Restlaufzeit R ermitteln. So kann beispielsweise ein linearer Verschmutzungsverlauf zugrunde gelegt werden. Sind dann seit Einbau oder Reinigung der Saugwalze "n" Tage vergangen, so kann die Restlaufzeit R berechnet werden durch:

$$\frac{n + R}{n} = \left| \frac{(Kmax - K0\%)}{(K - K0\%)} \right|$$

$$R = \left| \frac{(Kmax - K0\%)}{(K - K0\%)} \right| n - n$$

Diese Berechnung von R soll dabei nur beispielhaft zeigen, wie das Verfahren ausgeführt werden kann. Die Erfindung ist jedoch nicht auf diese Art der Ermittlung von R beschränkt.

Hinsichtlich der Vorrichtung wird die Aufgabe gelöst durch eine Vorrichtung zur Bestimmung der Verschmutzung einer Saugwalze einer Maschine zur Herstellung einer Faserstoffbahn, insbesondere einer Papier-, Karton-, Tissue oder Zellstoffbahn, umfassend eine Fluidquelle, die dazu eingerichtet ist, ein Fluid mit einem konstanten Druck oder einer konstanten Durchströmgeschwindigkeit zur Verfügung zu stellen, sowie Messmittel zur Bestimmung der Durchströmgeschwindigkeit und/oder des Druckabfalls des Fluides und eine Recheneinheit, wobei die Vorrichtung dazu eingerichtet ist, ein Verfahren gemäß einem der vorherigen Ansprüche durchzuführen.

In einer bevorzugten Ausführung der Vorrichtung kann vorgesehen sein, dass die Vorrichtung ein erstes Verbindungsstück mit einem ersten Einlass und einem ersten Auslass umfasst, welches vom Einlass zum Auslass von Fluid durchströmbar ist, wobei der Einlass mit der Fluidquelle verbunden oder verbindbar ist, und der Auslass so geformt ist, dass er auf einen ersten zylindrischen Walzenmantel aufsetzbar ist, und dort eine Messfläche A umschließt.

Ein solches Verbindungsstück stellt durch die gekrümmte Form des Auslasses sicher, dass das Fluid von der Druckquelle ausschließlich durch die Bohrungen des Walzenmantels geleitet wird. Hierfür ist es insbesondere vorteilhaft, wenn am Auslass Dichtmittel vorgesehen sind, um das Innere des Verbindungsstücks gegen die Umgebung abzudichten. Wenn das Verbindungsstück aus einem weichen Material wie z.B. einem Gummi hergestellt ist, so kann der Rand des Auslasses selbst das Dichtmittel bereitstellen. Es kann aber auch z.B. eine andere geeignete Dichtung angebracht werden. Alternativ oder zusätzlich kann es auch vorteilhaft sein, wenn der Rand selbst eine gewisse Stärke aufweist, die zumindest 75%, vorteilhafterweise zumindest 100%, insbesondere mehr als 150% des Durchmessers der größten Saugbohrung beträgt, um Falschluft zu verhindern. Bei üblichen Bohrungsdurchmessern von ca. 5mm ist eine Wandstärke von mehr als 5mm, insbesondere mehr als 7mm vorteilhaft. Aber auch Wandstärken von 10mm und mehr sind möglich.

Die gekrümmte Form des Auslasses ermöglicht weiterhin, dass als Druckquelle und Messmittel Standardgeräte verwendet werden können, die für andere Zwecke bereits existieren. Bei einem solchen Gerät kann es sich beispielsweise um den Air Permeability Tester FX 3345 der Schweizer Firma "textest" handeln, der für die Messung kontaminierter Filtermaterialien entwickelt wurde.

Um die Verwendung von Standardgeräten zu vereinfachen ist es zweckmäßig, wenn das erste Verbindungsstück lösbar mit der Fluidquelle verbunden ist.

Ein solches Verbindungsstück kann beispielsweise einfach und kostengünstig mittels eines additiven Verfahrens gefertigt werden. Da das Verbindungsstück außer der Fluiddurchströmung keinen weiteren Belastungen ausgesetzt ist, muss an das verwendete Material keine besonders hohe Anforderung gestellt werden. Es kann aus einem Kunststoff gefertigt sein. Für die Herstellung können prinzipiell auch einfache und kostengünstige 3D-Drucker verwendet werden.

In einigen Anwendungen kann es vorteilhaft sein, wenn im Inneren des ersten Verbindungsstücks ein strömungsbehinderndes Element, insbesondere ein Gitter- oder Filterelement vorgesehen ist. Ist beispielsweise die gewählte Fluidquelle überdimensioniert in dem Sinne, dass sie das Fluid mit einem zu hohen Druck zur Verfügung stellt, so kann dies durch ein geeignet gewähltes Filterelement geeignet angepasst werden. Als Beispiel hierfür sei das oben erwähnte Messgerät für Filterpapiere verwendet. Dieses stellt das Fluid (Luft) mit einem Druck zur Verfügung, der bei einem verstopften Filterpapier zu einer Durchströmmenge im Messbereich der eingebauten Messmittel führt. Bei einer Saugwalze mit einem deutlich geringeren Strömungswiderstand würde dieser Druck zu einer deutlich größeren Durchströmmenge führen, die möglicherweise außerhalb des Messbereiches liegt. Durch Vorsehen eines strömungsbehindernden Elements im Verbindungsstück kann der Strömungswiderstand erhöht, und damit die Durchflussmenge reduziert werden. Dabei sollte vorteilhafterweise darauf geachtet werden, dass das Element in seiner Struktur möglichst homogen über die Fläche ausgeprägt ist, damit nicht die Möglichkeit besteht, dass mögliche Verwirbelungen oder ähnliches das Messergebnis verfälschen oder beeinträchtigen.

Insbesondere kann es vorteilhaft sein, wenn das strömungsbehindernde Element bei Bedarf einfach aus dem Verbindungsstück entfernt und wieder eingesetzt, bzw. ein alternatives strömungsbehinderndes Element ausgetauscht werden kann. Auch dies erweitert den Einsatzbereich der vorgeschlagenen Vorrichtung.

Alternativ oder zusätzlich kann es vorteilhaft sein, wenn ein zweites Verbindungsstück mit einem zweiten Einlass und einem zweiten Auslass vorgesehen ist, wobei der zweite Einlass zusätzlich oder alternativ zum ersten Einlass mit der Fluidquelle verbunden oder verbindbar ist, und wobei der zweite Auslass so geformt ist, dass er auf einen zweiten zylindrischen Walzenmantel aufsetzbar ist, und dort eine Messfläche A umschließt, wobei der zweite zylindrische Walzenmantel insbesondere einen anderen Durchmesser aufweist, als der erste zylindrische Walzenmantel.

Im Folgenden wird die Erfindung anhand schematischer, nicht maßstäblicher Figuren weiter erläutert.

Figur 1 zeigt schematisch eine Vorrichtung gemäß einem Aspekt der Erfindung

Figur 2a und 2b zeigen Versuchsergebnisse für verschiedene Aspekte der Erfindung

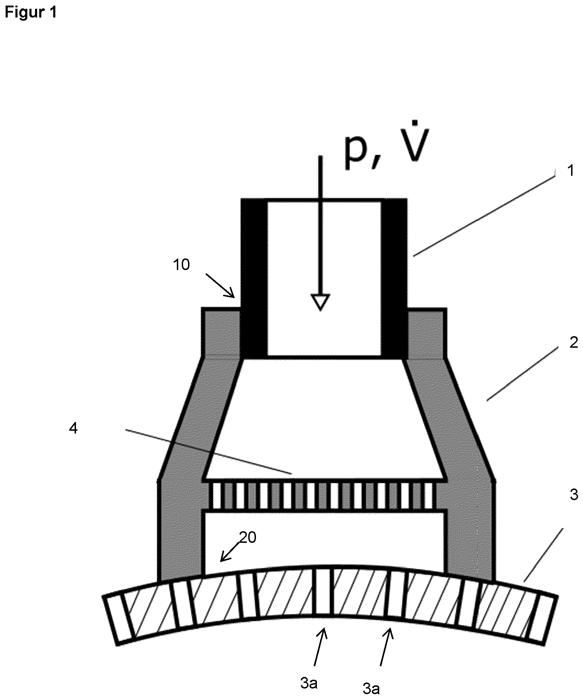

Die in Figur 1 gezeigte Vorrichtung zur Bestimmung der Verschmutzung einer Saugwalze weist eine Fluidquelle 1 auf, welche ein Fluid, insbesondere Luft mit einem Druck p und einer Durchströmgeschwindigkeit $\dot{V}$ zur Verfügung stellt. Das Fluid wird mittels der Vorrichtung durch die Öffnungen 3a des Walzenmantels 3 in Form von Bohrungen 3a geleitet. Dabei kann der Druck konstant gehalten werden, und die resultierende Durchströmgeschwindigkeit durch hier nicht dargestellte Messmittel bestimmt werden. Alternativ kann auch bei konstanter Durchströmgeschwindigkeit der resultierende Druckabfall ermittelt werden. Die so ermittelte Kenngröße K kann dann mit einer Referenzgröße K0 für die unverschmutzte Walze verglichen, und daraus ein Verschmutzungsgrad ermittelt werden.

Weiterhin weist die Vorrichtung ein Verbindungsstück 2, insbesondere ein erste Verbindungsstück 2 auf. Dieses hat einen Einlass 10 und einen Auslass 20. Dieses Verbindungsstück 2 ist mit seinem Einlass 10 mit der Fluidquelle 1 verbunden. Das Verbindungsstück 2 kann vom Fluid durchströmt werden. Der Auslass 20 ist so geformt, dass er auf den zylindrischen Walzenmantel 3 aufgesetzt werden kann. Er umschließt die Messfläche A und verhindert ein entweichen des Mediums in die Umgebung. So kann sichergestellt werden, dass das Fluid ausschließlich durch die Öffnungen 3a des Walzenmantels 3 strömt. Zudem können am Rand des Auslass 20 Dichtmittel vorgesehen sein, um das Innere des Verbindungsstücks 2 gegen die Umgebung abzudichten. In besonders bevorzugten Ausführungen kann der Rand des Auslasses 20 selbst als Dichtmittel dienen. So kann beispielsweise der Rand des Auslasses aus einem weichen Material, insbesondere einem Gummi bestehen. Alternativ oder zusätzlich kann es auch vorteilhaft sein, wenn der Rand selbst eine gewisse Stärke aufweist, die zumindest 75%, vorteilhafterweise zumindest 100%insbesondere mehr als 150% des Durchmessers der größten Saugbohrung 3a beträgt. Bei üblichen Bohrungsdurchmessern von ca. 5mm ist eine Wandstärke von mehr als 5mm, insbesondere mehr als 7mm vorteilhaft. Aber auch Wandstärken von 10mm und mehr sind möglich.

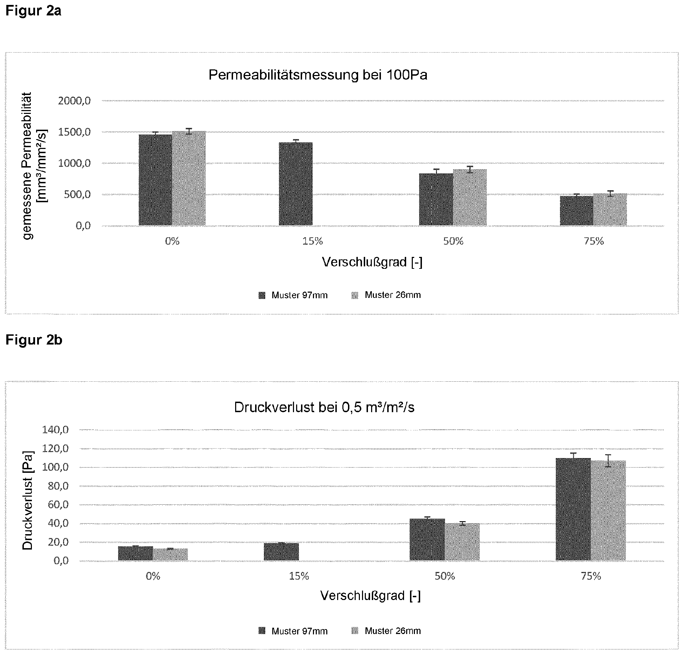

Die Figuren 2a und 2b zeigen Versuchsergebnisse von zwei Messereihen. Für die Ergebnisse aus Figur 2a wurde das Fluid mit konstantem Druck von 100 Pa bereitgestellt, und die resultierende Durchströmgeschwindigkeit ermittelt. Für die Ergebnisse aus Figur 2b wurde das Fluid mit konstanter Durchströmgeschwindigkeit von 0,5 m³/m²/2 (entspricht 500 mm³/mm²/s) bereitgestellt, und der resultierende Druckabfall gemessen. Beide Versuchsreihen wurden jeweils für Walzen mit unterschiedlich tiefen Bohrungen durchgeführt (97 mm sowie 26 mm). Zudem wurde das eingangs beschriebene Verfahren angewandt, dass neben Messungen an der unverschmutzten Walze (0%) auch Messungen an derselben Walze durchgeführt wurden, bei der die Bohrungen zu 15%/50%/75% verschlossen waren.

Die Grafiken zeigen, dass die Unterschiede der Messwerte durch die unterschiedliche Verschmutzung in beiden Fällen signifikant größer sind, als die Standardabweichung der Messwerte.

Durch Interpolation dieser jeweils vier Messwerte kann nun eine Interpolationsfunktion erstellt werden, die einen funktionalen Zusammenhang zwischen Verschmutzungsgrad ('Obstruction') und der gemessenen Kenngröße herstellt. Dieser funktionale Zusammenhang kann beispielsweise in einer Recheneinheit hinterlegt werden, welche dann aus dem aktuell gemessenen Wert der Kenngröße einen Verschmutzungsgrad ermittelt.

**Patentansprüche**

1. Verfahren zur Bestimmung der Verschmutzung einer Saugwalze einer Maschine zur Herstellung einer Faserstoffbahn, insbesondere einer Papier-, Karton-, Tissue oder Zellstoffbahn, umfassend die Schritte

    a. Durchströmen einer Messfläche A des Walzenmantels mit einem Fluid, wobei entweder der Druck oder die Durchströmgeschwindigkeit des Fluid konstant gehalten werden
    b. Ermitteln einer Kenngröße K, wobei die Kenngröße K bei Durchströmen mit konstantem Druck aus der resultierenden Durchströmgeschwindigkeit und bei Durchströmen mit konstanter Durchströmgeschwindigkeit aus dem resultierenden Druckabfall besteht.
    c. Bereitstellen einer oder mehrerer Referenzgrößen
    d. Bestimmung eines Verschmutzungsgrads der Saugwalze durch Vergleich der Kenngröße K mit der oder den Referenzgrößen.

2. Verfahren nach Anspruch 1, **dadurch gekennzeichnet, dass** die Schritte a. und b. n-mal, insbesondere mindestens 4 mal, bevorzugt mindestens 8 mal, an Messflächen $A_i$ (i=1,..n) wiederholt werden, wodurch Größen $K_i$ ermittelt werden, und die Kenngröße K als Mittelwert der $K_i$ gebildet wird.

3. Verfahren nach einem der vorherigen Ansprüche, **dadurch gekennzeichnet, dass** es sich bei dem Fluid um ein Gas, insbesondere um Luft handelt.

4. Verfahren nach einem der vorherigen Ansprüche, **dadurch gekennzeichnet, dass** die Durchströmung bei einem konstanten Druck erfolgt, und dieser Druck zwischen 20 Pa und 200 Pa, insbesondere zwischen 50 Pa und 150 Pa gewählt ist.

5. Verfahren nach einem der vorherigen Ansprüche, **dadurch gekennzeichnet, dass** die Durchströmung bei konstanter Durchströmgeschwindigkeit erfolgt, wobei diese Geschwindigkeit zwischen 250 mm³/mm²/s und 2000 mm³/mm²/s, insbesondere zwischen 500 mm³/mm²/s und 1000 mm³/mm²/s gewählt ist.

6. Verfahren nach einem der Ansprüche 2 bis 5, **dadurch gekennzeichnet, dass** die Messfläche A bzw. zumindest eine der Messflächen Ai einen Flächeninhalt von weniger als 4000 mm², insbesondere zwischen 2000 mm² und 3000 mm² aufweist.

7. Verfahren nach einem der vorherigen Ansprüche, **dadurch gekennzeichnet, dass** die Bestimmung des Verschmutzungsgrades dadurch erfolgt, dass eine Restlaufzeit R der Saugwalze durch Vergleich der Kenngröße K mit der oder den Referenzgrößen ermittelt wird.

8. Vorrichtung zur Bestimmung der Verschmutzung einer Saugwalze einer Maschine zur Herstellung einer Faserstoffbahn, insbesondere einer Papier-, Karton-, Tissue oder Zellstoffbahn, umfassend eine Fluidquelle (1), die dazu eingerichtet ist, ein Fluid mit einem konstanten Druck oder einer konstanten Durchströmgeschwindigkeit zur Verfügung zu stellen, sowie Messmittel zur Bestimmung der Durchströmgeschwindigkeit und/oder des Druckabfalls des Fluides und eine Recheneinheit, wobei die Vorrichtung dazu eingerichtet ist, ein Verfahren gemäß einem der vorherigen Ansprüche durchzuführen.

9. Vorrichtung nach Anspruch 8, **dadurch gekennzeichnet, dass** die Vorrichtung ein erstes Verbindungsstück (2) mit einem ersten Einlass (10) und einem ersten Auslass (20) umfasst, welches vom Einlass (10) zum Auslass (20) von Fluid durchströmbar ist, wobei der Einlass (10) mit der Fluidquelle (1) verbunden oder verbindbar ist, und der Auslass (20) so geformt ist, dass er auf einen ersten zylindrischen Walzenmantel (3) aufsetzbar ist, und dort eine Messfläche A umschließt.

10. Vorrichtung nach Anspruch 9, **dadurch gekennzeichnet, dass** am Auslass (20) Dichtmittel vorgesehen sind, um das Innere des ersten Verbindungsstücks (2) gegen die Umgebung abzudichten.

11. Vorrichtung nach einem der Ansprüche 9 oder 10, **dadurch gekennzeichnet, dass** das erste Verbindungsstück (2) lösbar mit der Fluidquelle (1) verbunden ist.

**12.** Vorrichtung nach einem der Ansprüche 9 bis 11, **dadurch gekennzeichnet, dass** im Inneren des ersten Verbindungsstücks (1) ein strömungsbehinderndes Element (4), insbesondere ein Gitter- oder Filterelement (4) vorgesehen ist.

**13.** Vorrichtung nach einem der Ansprüche 9 bis 12, **dadurch gekennzeichnet, dass** ein zweites Verbindungsstück mit einem zweiten Einlass und einem zweiten Auslass vorgesehen ist, wobei der zweite Einlass zusätzlich oder alternativ zum ersten Einlass mit der Fluidquelle verbunden oder verbindbar ist, und wobei der zweite Auslass so geformt ist, dass er auf einen zweiten zylindrischen Walzenmantel (3) aufsetzbar ist, und dort eine Messfläche A umschließt, wobei der zweite zylindrische Walzenmantel insbesondere einen anderen Durchmesser aufweist, als der erste zylindrische Walzenmantel (3).

**Claims**

**1.** Method for determining the soiling of a suction roll of a machine for producing a fibrous web, in particular a paper, board, tissue or pulp web, comprising the steps of

  a. Flowing a fluid through a measuring surface A of the roll shell, whereby either the pressure or the flow rate of the fluid is kept constant.
  b. Determining a characteristic variable K, whereby the characteristic variable K consists of the resulting flow velocity for flow at constant pressure and the resulting pressure drop for flow at constant flow velocity.
  c. Provide one or more reference variables
  d. Determination of a degree of contamination of the suction roll by comparison of the characteristic variable K with the reference variable or variables.

**2.** Method according to claim 1, **characterised in that** the steps a. and b. are repeated n times, in particular at least 4 times, preferably at least 8 times, on measuring surfaces $A_i$ (i=1,..n), whereby quantities $K_i$ are determined, and the characteristic quantity K is formed as the mean value of the $K_{·i}$

**3.** Method according to one of the previous claims, **characterised in that the** fluid is a gas, in particular air.

**4.** Method according to one of the previous claims, **characterised in that** the flow takes place at a constant pressure, and this pressure is chosen between 20 Pa and 200 Pa, in particular between 50 Pa and 150 Pa.

**5.** Method according to one of the previous claims, **characterised in that** the flow takes place at a constant flow velocity, this velocity being selected between 250 $mm^3/mm^2$/s and 2000 $mm^3/mm^2$/s, in particular between 500 $mm^3/mm^2$/s and 1000 $mm^3/mm^2$/s.

**6.** Method according to one of claims 2 to 5, **characterised in that** the measuring surface A or at least one of the measuring surfaces Ai has an area of less than 4000 $mm^2$, in particular between 2000 $mm^2$ and 3000 $mm^2$.

**7.** Method according to one of the previous claims, **characterised in that the** degree of contamination is determined by determining a residual running time R of the suction roller by comparing the characteristic variable K with the reference variable or variables.

**8.** Device for determining the soiling of a suction roll of a machine for producing a fibrous web, in particular a paper, board, tissue or pulp web, comprising a fluid source (1) which is set up to provide a fluid with a constant pressure or a constant throughflow velocity, as well as measuring means for determining the throughflow velocity and/or the pressure drop of the fluid and a computing unit, the device being set up to carry out a method according to one of the previous claims.

**9.** Device according to claim 8, **characterized in that** the device comprises a first connecting piece (2) with a first inlet (10) and a first outlet (20), through which fluid can flow from the inlet (10) to the outlet (20), the inlet (10) being connected or connectable to the fluid source (1), and the outlet (20) being shaped such that it can be placed on a first cylindrical roller shell (3) and encloses a measuring surface A there.

**10.** The device according to claim 9, **characterised in that** sealing means are provided at the outlet (20) to seal the interior of the first connector (2) from the environment.

**11.** A device according to any one of claims 9 or 10, **characterised in that** the first connector (2) is detachably connected to the fluid source (1).

**12.** Device according to any one of claims 9 to 11, **characterised in that** a flow obstructing element (4), in particular a grid or filter element (4), is provided inside the first connecting piece (1).

**13.** Device according to one of the claims 9 to 12, **characterised in that** a second connecting piece with a second inlet and a second outlet is provided, the second inlet being connected or connectable to the fluid source in addition to or as an alternative to the first inlet, and the second outlet being shaped in such a way that it can be placed on a second cylindrical roller shell (3) and encloses a measuring surface A there, the second cylindrical roller shell having, in particular, a different diameter than the first cylindrical roller shell (3).

## Revendications

1. Procédé pour déterminer l'encrassement d'un rouleau aspirant d'une machine pour la fabrication d'une bande fibreuse, en particulier d'une bande de papier, de carton, de papier tissu ou de cellulose, comprenant les étapes suivantes

   a. faire passer un fluide à travers une surface de mesure A de l'enveloppe du cylindre, en maintenant constante soit la pression, soit la vitesse de passage du fluide
   b. Détermination d'une grandeur caractéristique K, la grandeur caractéristique K étant constituée, pour un écoulement à pression constante, de la vitesse d'écoulement résultante et, pour un écoulement à vitesse d'écoulement constante, de la chute de pression résultante.
   c. Fournir une ou plusieurs grandeurs de référence
   d. Détermination d'un degré d'encrassement du rouleau aspirant par comparaison de la grandeur caractéristique K avec la ou les grandeurs de référence.

2. Procédé selon la revendication 1, **caractérisé en ce que** les étapes a. et b. sont répétées n fois, en particulier au moins 4 fois, de préférence au moins 8 fois, sur des surfaces de mesure $A_i$ (i=1,...n), ce qui permet de déterminer des grandeurs $K_i$, et la grandeur caractéristique K est formée comme valeur moyenne des $K_i$.

3. Procédé selon l'une quelconque des revendications précédentes, **caractérisé en ce que** le fluide est un gaz, notamment de l'air.

4. Procédé selon l'une des revendications précédentes, **caractérisé en ce que** l'écoulement se fait à pression constante, et cette pression est choisie entre 20 Pa et 200 Pa, notamment entre 50 Pa et 150 Pa.

5. Procédé selon l'une quelconque des revendications précédentes, **caractérisé en ce que** l'écoulement se fait à vitesse d'écoulement constante, cette vitesse étant choisie entre 250 mm$^3$/mm$^2$/s et 2000

mm$^3$/mm$^2$/s, notamment entre 500 mm$^3$/mm$^2$/s et 1000 mm$^3$/mm$^2$/s.

6. Procédé selon l'une des revendications 2 à 5, **caractérisé en ce que** la surface de mesure A ou au moins l'une des surfaces de mesure Ai présente une superficie inférieure à 4000 mm$^2$, en particulier comprise entre 2000 mm$^2$ et 3000 mm$^2$.

7. Procédé selon l'une des revendications précédentes, **caractérisé en ce que** la détermination du degré d'encrassement est réalisée en déterminant un temps de fonctionnement résiduel R du rouleau aspirant par comparaison de la grandeur caractéristique K avec la ou les grandeurs de référence.

8. Dispositif pour déterminer l'encrassement d'un rouleau aspirant d'une machine de fabrication d'une bande fibreuse, en particulier d'une bande de papier, de carton, de papier tissu ou de pâte à papier, comprenant une source de fluide (1) adaptée pour fournir un fluide à une pression constante ou à une vitesse de passage constante, ainsi que des moyens de mesure pour déterminer la vitesse de passage et/ou la chute de pression du fluide et une unité de calcul, le dispositif étant adapté pour mettre en oeuvre un procédé selon l'une des revendications précédentes.

9. Dispositif selon la revendication 8, **caractérisé en ce que** le dispositif comprend une première pièce de liaison (2) avec une première entrée (10) et une première sortie (20), qui peut être traversée par un fluide de l'entrée (10) à la sortie (20), l'entrée (10) étant reliée ou pouvant être reliée à la source de fluide (1), et la sortie (20) étant formée de telle sorte qu'elle peut être placée sur une première enveloppe de rouleau cylindrique (3) et y entoure une surface de mesure A.

10. Dispositif selon la revendication 9, **caractérisé en ce que** des moyens d'étanchéité sont prévus à la sortie (20) pour rendre l'intérieur du premier raccord (2) étanche à l'environnement.

11. Dispositif selon l'une des revendications 9 ou 10, **caractérisé en ce que** le premier connecteur (2) est relié de manière amovible à la source de fluide (1).

12. Dispositif selon l'une des revendications 9 à 11, **caractérisé en ce qu'il** est prévu à l'intérieur de la première pièce de liaison (1) un élément (4) faisant obstacle à l'écoulement, notamment un élément de grille ou de filtre (4).

13. Dispositif selon l'une des revendications 9 à 12, **caractérisé en ce qu'**il est prévu une deuxième pièce de liaison avec une deuxième entrée et une deuxième sortie, la deuxième entrée étant reliée ou pouvant être reliée à la source de fluide en plus ou en alternative à la première entrée, et la deuxième sortie étant formée de manière à pouvoir être placée sur une deuxième enveloppe de cylindre (3) et y entourer une surface de mesure A, la deuxième enveloppe de cylindre présentant en particulier un autre diamètre que la première enveloppe de cylindre (3).

Figur 1

**Figur 2a**

**Figur 2b**

**IN DER BESCHREIBUNG AUFGEFÜHRTE DOKUMENTE**

**In der Beschreibung aufgeführte Patentdokumente**

- DE 102008002259
- DE 102015220939